# FASCICULE DE BREVET EUROPEEN

(11) **EP 2 147 440 B1**
(45) Date de publication et mention de la délivrance du brevet: **30.03.2011**
(21) Numéro de dépôt: 08805772.4
(22) Date de dépôt: 13.05.2008
(51) Int. Cl.: G21C 3/16, G21C 21/02, G21C 3/04

(54) **COMBUSTIBLE NUCLEAIRE SOUS FORME DE PASTILLE, A STRUCTURE PERFECTIONNEE**
PILLENFÖRMIGER NUKLEARBRENNSTOFF MIT ERWEITERTER STRUKTUR
PELLET SHAPED NUCLEAR FUEL WITH ADVANCED STRUCTURE

(30) Priorité: 14.05.2007 FR 0703453
(43) Date de publication de la demande: 27.01.2010
(73) Titulaire: Electricité de France, 75008 Paris (FR)
(72) Inventeur: COUTY, Jean-Christophe, 49400 Saumur (FR); ESPOSITO, Pascal, 92370 Chaville (FR)
(74) Mandataire: Cabinet Plasseraud
(86) Numéro de dépôt international: PCT/FR2008/050824
(87) Numéro de publication internationale: WO 2008/149013

(56) Documents cités:
- WO-A-02/45097
- FR-A- 2 011 954
- JP-A- 3 142 400
- US-A- 4 111 748

## Description

La présente invention concerne un combustible nucléaire destiné à des applications dans des réacteurs nucléaires.

Elle traite plus particulièrement d'un combustible en forme de pastille destinée à des crayons combustibles en fagot dans des réacteurs, notamment pour la production d'électricité.

A titre d'exemples d'applications, on peut citer :
- les réacteurs à eau pressurisée (ou PWR pour « Pressurized Water Reactor »),
- les réacteurs bouillants, ou encore
- les réacteurs à neutrons rapides.

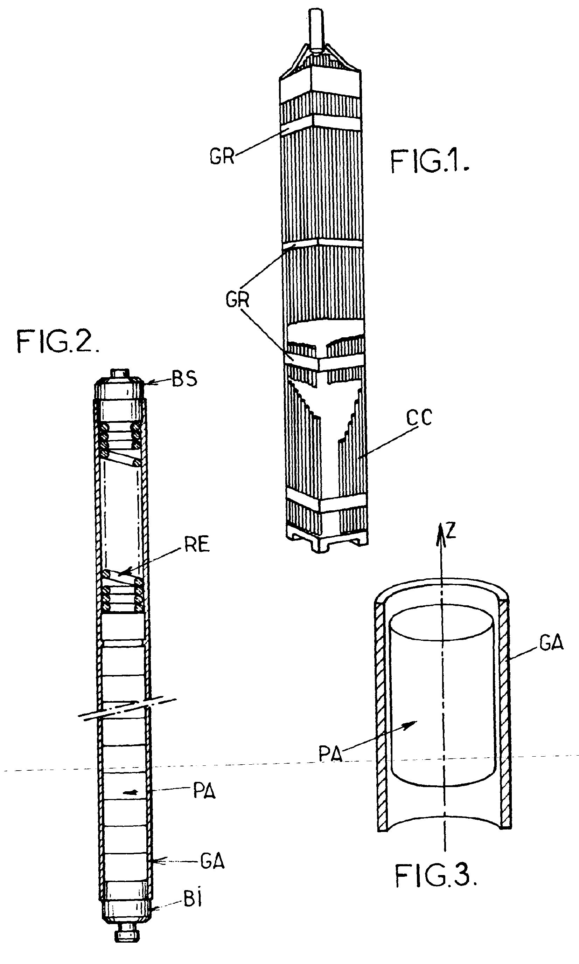

En référence à la figure 1, dans un réacteur pour une des applications du type précité, des tubes CC (appelés « crayons combustibles ») sont assemblés à l'aide notamment de grilles de maintien GR. Dans chaque crayon combustible (figure 2), une pluralité de pastilles combustibles PA sont enfilées dans une gaine GA. Les pastilles combustibles sont par exemple en dioxyde d'uranium UO₂, éventuellement dopé. La gaine GA est par exemple réalisée dans un alliage de zirconium. Les pastilles PA sont maintenues dans la gaine par des bouchons supérieur BS et inférieur BI et restent accolées les unes aux autres par la pression d'au moins un ressort RE.

En référence à la figure 3 donnée ici à titre d'exemple, chaque pastille PA se présente sensiblement comme un filtre de cigarette. Il s'agit d'un cylindre dont les dimensions sont par exemple d'environ 13 millimètres de hauteur (le long de l'axe z) et d'environ 8 millimètres de diamètre. Selon les applications, la pastille PA peut être creuse ou pleine. Elle peut encore être creuse partiellement seulement et présenter par exemple un évidement. La gaine GA, quant à elle, est d'environ 9 millimètres de diamètre et d'environ 4 mètres de hauteur.

Ainsi, dans un réacteur à eau pressurisée par exemple, le combustible nucléaire se présente sous la forme de pastilles PA empilées dans des gaines GA chargées de maintenir les pastilles et de confiner les produits de fission pour éviter leur dissémination dans l'eau du circuit primaire. Les crayons combustibles ainsi formés sont agencés sous la forme d'un assemblage combustible (par exemple selon un réseau de 17x17 crayons combustibles) dont la tenue mécanique est assurée par les grilles GR, comme illustré sur la figure 1.

La gaine GA de chaque crayon combustible constitue la première barrière de protection contre le rejet du produit de fission nucléaire. Cette gaine doit rester intègre pour toutes les situations de fonctionnement normal, ainsi que pour tous les transitoires incidentels dans les réacteurs du type précité.

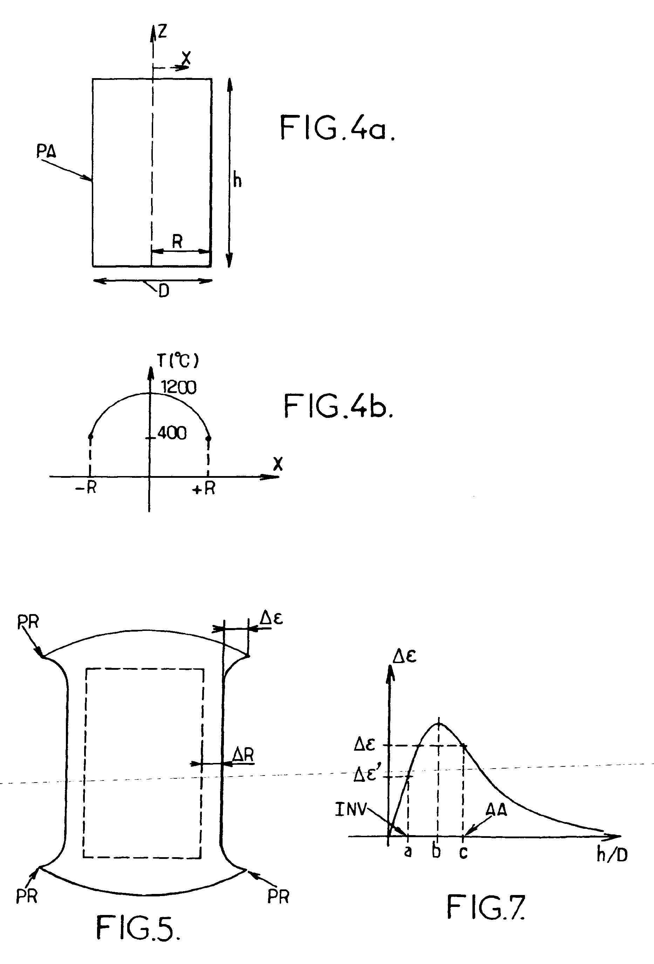

Dès la montée en puissance du réacteur, la réaction de fission produit un dégagement de chaleur dans la pastille. On a représenté sur la figure 4b la distribution de chaleur dans la pastille PA en comparaison de ses dimensions sur la figure 4a (laquelle respecte les proportions habituelles d'une pastille). La distribution de chaleur, en fonctionnement normal et à pleine puissance, est sensiblement parabolique sur le diamètre de la pastille avec une température d'environ 1200°C au centre et une température d'environ 400°C aux bords (-R et +R sur l'axe x de la figure 4b, cet axe x étant orthogonal à l'axe z). L'augmentation de chaleur au centre de la pastille PA entraîne alors une déformation radiale, par dilation thermique, qui est plus importante aux extrémités supérieures et inférieures de la pastille. Ainsi, en référence maintenant à la figure 5, la pastille présente, sous l'effet de la dilatation thermique, une forme de « diabolo » avec des protubérances radiales PR particulièrement marquées aux extrémités de la pastille.

On a représenté sur la figure 5, en traits pointillés, la forme initiale de la pastille (avant l'augmentation de température) et, en trait plein, la forme de la pastille dilatée. On constate en particulier, aux extrémités de la pastille, une augmentation de diamètre Δε qui vient s'ajouter à la dilatation radiale Δ*R*, normale, du centre de la pastille. Cette sur-dilatation Δε, plus marquée aux extrémités inférieure et supérieure de la pastille globalement cylindrique, est liée à des effets de bord sur un cylindre de dimensions finies.

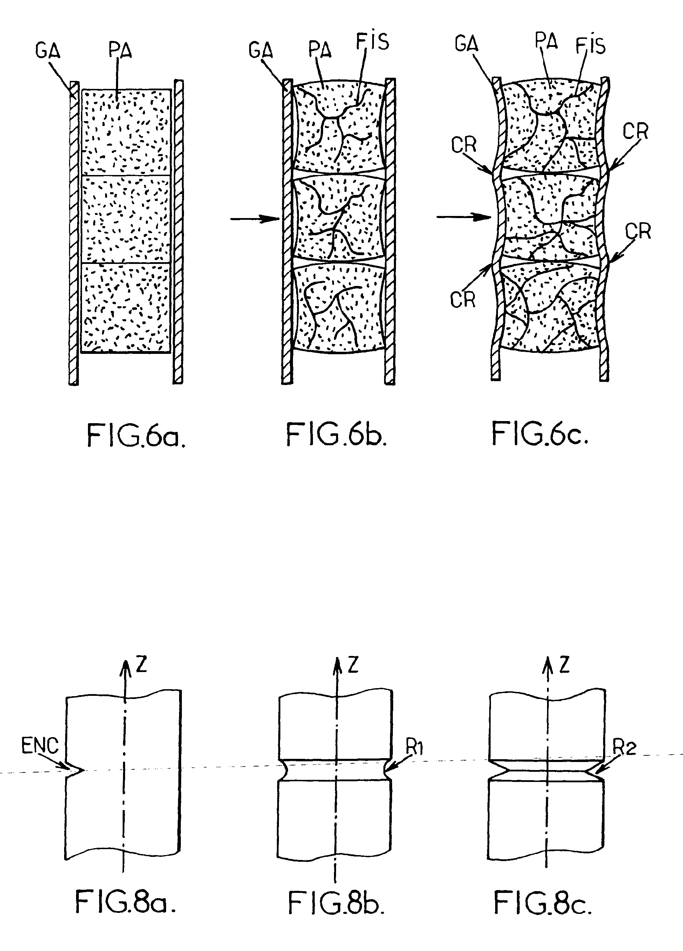

En référence aux figures 6a, 6b et 6c, illustrant une montée progressive en température des pastilles PA dans leur gaine GA, l'augmentation du diamètre Δε marquée aux extrémités des pastilles génère alors des contraintes CR dans la gaine GA. Cet effet sollicite mécaniquement la gaine et contribue à son affaiblissement, lequel est d'autant plus marqué que la sur-dilatation Δε est importante. Il a été d'ailleurs constaté sur les gaines, après leur utilisation, des vaguelettes sur leur surface radiale avec un espacement entre vaguelettes correspondant à une hauteur de pastille, exactement comme représenté sur la figure 6c.

Il convient de noter en outre, sur les figures 6b et 6c, que dès le début de montée en température, des fissures FIS se forment aléatoirement dans les pastilles. En effet, le gradient thermique imposé à la pastille génère de fortes contraintes de traction de la pastille en céramique, ce matériau étant fragile.

En référence maintenant à la figure 7, il a été constaté que l'augmentation supplémentaire de diamètre Δε était liée à l'élancement de la pastille, mesuré typiquement par le rapport h/D de sa hauteur h sur son diamètre D. La figure 7 illustre la variation de l'augmentation supplémentaire de diamètre Δε en fonction du facteur d'élancement h/D. Cette variation présente un unique maximum pour un rapport d'élancement h/D d'une valeur b (qui est par exemple de l'ordre de 0,9 à 1,3). Pour des pastilles de l'état de l'art d'environ 13 millimètres de haut sur environ 8 millimètres de diamètre, le facteur d'élancement h/D est voisin de c=1,6 (flèche AA pour « art antérieur » sur la figure 7) et l'augmentation supplémentaire de diamètre aux extrémités de la pastille, Δε, reste importante, proche du maximum.

Une solution pour limiter la sur-dilatation Δε serait de prévoir des valeurs du rapport d'élancement h/D inférieures à la valeur b, par exemple voisines d'une valeur a qui pourrait typiquement être inférieure ou de l'ordre de 0,5 (flèche INV pour « invention » sur la figure 7). Cette réalisation consisterait alors à prévoir par exemple des pastilles d'une hauteur de 3 millimètres environ pour conserver un diamètre de 8 millimètres. De telles pastilles auraient typiquement la forme d'une pile plate de montre. Il se pose alors le problème de l'introduction et de l'empilement des pastilles dans une gaine de 4 mètres, sans que certaines pastilles au moins ne pivotent et ne se mettent de biais dans la gaine.

La présente invention vient améliorer la situation.

Elle propose à cet effet une pastille comportant un matériau combustible nucléaire, de forme générale allongée le long d'un axe (typiquement l'axe z dans l'exemple représenté sur la figure 3).

La pastille selon l'invention comporte alors sur sa surface latérale extérieure au moins une zone de rupture privilégiée pour favoriser une rupture sensiblement dans un plan sécant dudit axe.

Cette zone de rupture privilégiée est typiquement un évidement creusé sur la surface externe de la pastille. Il peut s'agir par exemple d'un poinçon, d'une encoche, d'une rainure ou autre, l'essentiel étant que la pastille au sens de l'invention puisse se fissurer, dès la montée en température, dans un plan sécant (par exemple perpendiculaire) à l'axe z de la figure 3.

Dans une réalisation avantageuse, la pastille comporte plus d'une zone de rupture privilégiée de manière à obtenir un facteur d'élancement de chaque morceau, après rupture, inférieur ou de l'ordre de 0,5, ce qui permet de diminuer substantiellement le paramètre Δε de la figure 7, par rapport à l'art antérieur (flèche AA). En particulier, le nombre de zones de rupture privilégiées que comporte la pastille peut être choisi pour favoriser une rupture en plusieurs fragments, chaque fragment ayant alors un rapport de hauteur sur largeur inférieur ou de l'ordre de 0,5.

Ainsi, si la pastille présente initialement un rapport de hauteur sur largeur supérieur ou de l'ordre de 1,5, on prévoit avantageusement au moins deux zones de rupture privilégiée, qui peuvent par exemple être agencées sensiblement à un tiers et à deux tiers de la hauteur de la pastille, respectivement.

Dans un exemple de réalisation décrit en détail ci-après la pastille comporte trois zones de rupture privilégiée pour un facteur d'élancement voisin de 1,6.

D'ailleurs, d'autres caractéristiques et avantages de l'invention apparaîtront à l'examen de la description détaillée ci-après, et des dessins annexés sur lesquels :
- la figure 1 illustre un assemblage de combustible nucléaire à crayons combustibles,
- la figure 2 est une vue en coupe d'un crayon combustible,
- la figure 3 illustre une pastille nucléaire dans une gaine formant un crayon combustible,
- la figure 4a illustre les proportions d'une pastille classique,
- la figure 4b illustre une répartition en température dans la pastille, pendant la réaction de fission nucléaire, en fonctionnement normal à pleine puissance,
- la figure 5 illustre la dilatation que subit une pastille pendant la réaction de fission, en fonctionnement normal à pleine puissance,
- les figures 6a à 6c illustrent la déformation des pastilles sous l'effet de l'augmentation de la température pendant la réaction de fission nucléaire, entraînant les contraintes CR imposées à la gaine,
- la figure 7 illustre une variation d'une augmentation supplémentaire da diamètre Δε aux extrémités inférieure et supérieure de la pastille, en fonction de son facteur d'élancement h/D,
- les figures 8a à 8c illustrent différents modes de réalisation d'une zone de rupture privilégiée réalisée dans une pastille au sens de l'invention,
- la figure 9a illustre une pastille comportant trois zones de rupture privilégiée, dans un mode de réalisation avantageux,
- la figure 9b illutre la pastille de la figure 9a pendant une réaction de fission nucléaire lors de la première montée en température d'une pastille neuve au sens de l'invention,
- la figure 10a illustre schématiquement une installation pour la mise en oeuvre d'un procédé de formation des zones de rupture privilégiée dans les pastilles au sens de l'invention, et
- la figure 10b est une vue en coupe d'un moule de frittage pour la fabrication de pastilles au sens de l'invention et comportant directement en sortie de moule des zones de rupture privilégiée.

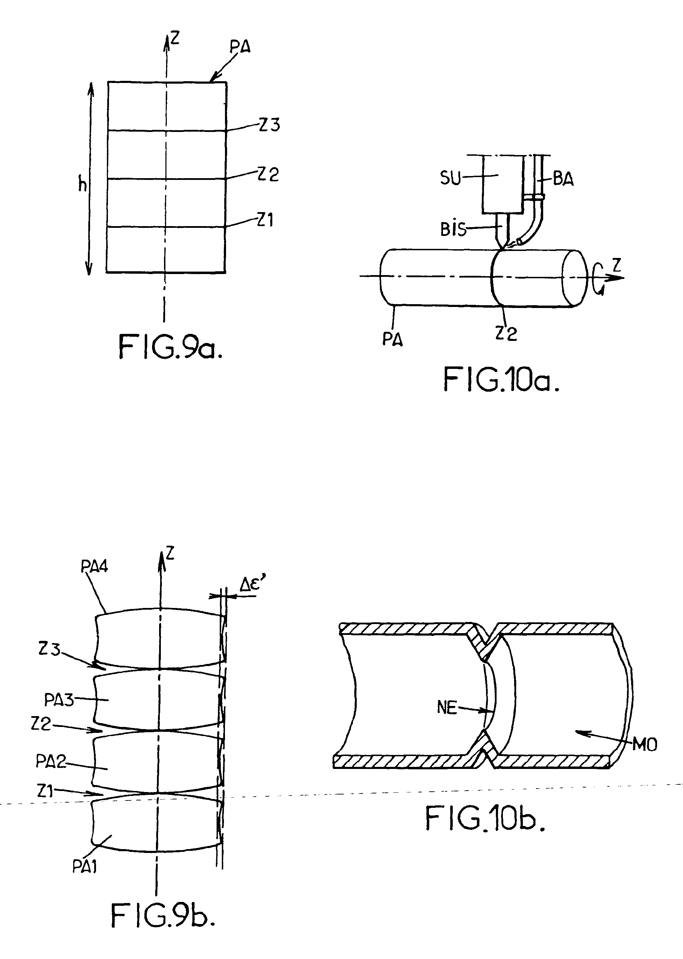

On a représenté sur la figure 9a une pastille au sens de l'invention comportant un rapport de hauteur sur largeur voisin de 1,6. On prévoit trois zones de rupture privilégiée, agencées sensiblement à un quart Z1, à la moitié Z2 et à trois quarts Z3 de la hauteur h de la pastille PA, respectivement. Ainsi, lors d'une première montée en puissance, la pastille se fissure au moins en quatre morceaux PA1, PA2, PA3 et PA4, comme illustré sur la figure 9b, chaque morceau ayant un facteur d'élancement voisin de 0,4. En référence à la figure 7, avec ce facteur d'élancement de 0,4, l'augmentation supplémentaire de diamètre Δε' de chaque morceau PA1, PA2, PA3 ou PA4 est substantiellement inférieure à celle Δε d'une pastille entière ayant un facteur d'allongement de 1,6.

Par conséquent, en référence à nouveau à la figure 9b, avec la faible valeur Δε' atteinte pour l'ensemble des morceaux PA1 à PA4 formant la pastille, les contraintes imposées à la gaine GA sont notablement réduites.

En référence à la figure 7, une solution qui semblait aussi avantageuse à l'homme du métier pour limiter la sur-dilatation Δε était de choisir des valeurs de rapport d'élancement h/D supérieures à la valeur de maximum b (ce qui revient donc, à diamètre constant, à augmenter la hauteur des pastilles). En effet, la sur-dilatation Δε diminue à nouveau pour des rapports d'élancement supérieurs à la valeur b. Or, les fissures qui se créent dans la pastille peuvent typiquement engendrer des fragments dont le rapport d'élancement serait proche de la valeur b, ce qui ne résout pas le problème posé par la sur-dilatation Δε.

En outre, on rappelle, pour indiquer des dimensions absolues d'une pastille avant rupture, que sa hauteur est supérieure ou de l'ordre d'un centimètre, par exemple 13 millimètres de hauteur pour 8 millimètres de diamètre, pour se conformer aux dimensions classiques des pastilles de l'état de l'art. Ainsi, le procédé visant à empiler les pastilles dans la gaine GA reste inchangé et, de manière plus générale, sans modifier globalement la forme et les dimensions des pastilles, on diminue avantageusement leur sur-dilatation Δε et, de là, les contraintes que subit la gaine GA.

En référence à la figure 8a, une zone de rupture privilégiée formée dans une pastille au sens de l'invention peut avoir la forme d'une encoche ENC réalisée comme une indentation sur la surface latérale de la pastille et qui s'étend au moins sur un arc de cercle de cette surface.

Dans la réalisation illustrée sur les figures 8b et 8c, l'encoche peut se prolonger sur un cercle complet inscrit dans un plan sensiblement perpendiculaire à l'axe z de la hauteur de la pastille, pour former une rainure R1 ou R2 de profondeur sensiblement constante.

Dans la réalisation de la figure 8b, la rainure est en forme de U, tandis que dans la réalisation de la figure 8c, la rainure est en forme de V. Le mode de réalisation de la figure 8c peut être préféré pour provoquer très rapidement la rupture de la pastille, dès le début de sa montée en température. Dans ce cas, si la pastille est gravée par usinage pour former les rainures R2, on choisira un biseau en pointe. Plus généralement, la forme et/ou la profondeur de la rainure R1 ou R2 peuvent être choisies pour provoquer plus ou moins rapidement la rupture de la pastille. Néanmoins, plus les rainures usinées sont profondes et plus la quantité de matière nucléaire prélevée des pastilles est importante, ce qui pose un problème de matières nucléaires à recycler.

On a illustré sur la figure 10a un exemple de procédé d'usinage que vise aussi la présente invention dans lequel on grave au moins une zone de rupture privilégiée Z2 dans la pastille PA, en prévoyant en particulier une récupération des rebuts de gravure. Dans cette réalisation, la pastille PA est mise en rotation, tandis qu'un biseau en pointe BIS est appliqué contre la surface radiale externe de la pastille. Avantageusement, le biseau BIS est fixé sur un support SU et une buse aspirante BA est fixée sur le même support BU pour récupérer par aspiration directe les rebuts d'usinage générés par la gravure. Cette matière nucléaire, ainsi récupérée, peut être recyclée pour fabriquer d'autres pastilles par exemple.

Une variante de ce mode de formation de zones de rupture privilégiée dans la pastille peut consister à fabriquer directement, par moulage, la pastille PA dans une céramique comportant un matériau combustible nucléaire, et en prévoyant en particulier un moule MO comportant au moins une nervure NE formant saillie sur une paroi interne du moule, comme illustré sur la figure 10b. Chaque nervure NE du moule cylindrique MO applique une indentation dans la pastille en cours de fabrication par frittage en formant alors une rainure circulaire du type illustré par exemple sur la figure 8c.

Bien entendu, la présente invention ne se limite pas à la forme de réalisation décrite ci-avant à titre d'exemple ; elle s'étend à d'autres variantes.

Ainsi, on a représenté par exemple sur les dessins des pastilles pleines. L'invention s'applique toutefois à tout type de pastille, notamment à des pastilles creuses. Pour la réalisation des zones de rupture privilégiée sur de telles pastilles creuses, on prévoit de former toujours (par usinage ou par moulage comme décrit précédemment) ces zones sur leur surface radiale externe, en pratique.

Par ailleurs, on a décrit ci-avant des pastilles de forme générale cylindrique. En variante, il peut être prévu des formes différentes, par exemple oblongues, parallélépipédiques ou autres.

Comme décrit ci-avant, les rainures sont de préférence formées sur tout un cercle de la surface extérieure d'une pastille et sont inscrites chacune dans un plan perpendiculaire à l'axe z de la hauteur de la pastille. En principe, lorsque la pastille se rompt, la rupture s'inscrit aussi dans le même plan perpendiculaire à l'axe z et, si la pastille comporte N rainures, elle se rompt en N+1 morceaux. Toutefois, il peut advenir accidentellement qu'elle se rompe en plus de N+1 morceaux et/ou que la rupture ne soit pas dans un plan parfaitement perpendiculaire à l'axe z, mais simplement dans un plan sécant à cet axe.

## Revendications

1. Pastille comportant un matériau combustible nucléaire, de forme générale allongée le long d'un axe (z), **caractérisée en ce qu'**elle comporte sur sa surface latérale extérieure au moins une zone de rupture privilégiée pour favoriser une rupture sensiblement dans un plan sécant dudit axe (z).

2. Pastille selon la revendication 1, de forme sensiblement cylindrique et de base sensiblement circulaire, **caractérisée en ce que** la zone de rupture privilégiée comporte une encoche (ENC) s'étendant au moins sur un arc de cercle.

3. Pastille selon la revendication 2, **caractérisée en ce que** l'encoche forme une rainure (R1, R2) de profondeur sensiblement constante.

4. Pastille selon la revendication 3, **caractérisée en ce que** la rainure (R1, R2) s'étend sur un cercle complet inscrit dans un plan sensiblement perpendiculaire audit axe (z).

5. Pastille selon l'une des revendications précédentes, **caractérisée en ce qu'**elle comporte un nombre choisi de zones de rupture privilégiées pour favoriser une rupture en une pluralité de fragments, chaque fragment ayant un rapport de hauteur sur largeur inférieur ou de l'ordre de 0,5.

6. Pastille selon la revendication 5, comportant un rapport de hauteur (h) sur largeur (D) supérieur ou de l'ordre de 1,5, **caractérisée en ce qu'**elle comporte au moins deux zones de rupture privilégiée (Z1, Z2, Z3).

7. Pastille selon la revendication 6, comportant un rapport de hauteur (h) sur largeur (D) voisin de 1,6, **caractérisée en ce qu'**elle comporte trois zones de rupture privilégiée (Z1, Z2, Z3), agencées sensiblement à un quart, à la moitié et à trois quarts de la hauteur de la pastille, respectivement.

8. Pastille selon l'une des revendications 6 et 7, **caractérisée en ce que** la hauteur (h) de la pastille (PA) est supérieure ou de l'ordre d'un centimètre.

9. Procédé de fabrication, par frittage, d'une pastille selon l'une des revendications précédentes, dans une céramique comportant un matériau combustible nucléaire, **caractérisé en ce que** l'on prévoit un moule (MO) comportant au moins une nervure (NE) formant saillie sur une paroi interne du moule.

10. Procédé de fabrication, par usinage, d'une pastille selon l'une des revendications 1 à 8. dans lequel on grave au moins une zone de rupture privilégiée dans la pastille, **caractérisé en ce que** l'on prévoit une récupération (BA) des rebuts de gravure pour recyclage.

## Claims

1. Pellet comprising a nuclear fuel material, having a generally elongated shape along an axis (z), **characterized in that** it comprises on its lateral outer surface at least one privileged breaking area for promoting a breaking substantially in a plane intersecting said axis (z).

2. Pellet according to claim 1, having a substantially cylindrical shape and a substantially circular base, **characterized in that** the privileged breaking area comprises a notch (ENC) extending at least over an arc of circle.

3. Pellet according to claim 2, **characterized in that** the notch forms a groove (R1, R2) having a substantially constant depth.

4. Pellet according to claim 3, **characterized in that** the groove (R1, R2) extends over a full circle inscribed in a plane substantially perpendicular to said axis (z).

5. Pellet according to one of the previous claims, **characterized in that** it comprises a chosen number of privileged breaking areas for promoting a breaking into a plurality of fragments, each fragment having a height-to-width ratio less than, or of the order of, 0.5.

6. Pellet according to claim 5, comprising a height (h) to width (D) ratio greater than, or of the order of, 1.5, **characterized in that** it comprises at least two privileged breaking areas (Z1, Z2, Z3).

7. Pellet according to claim 6, comprising a height (h) to width (D) ratio close to 1.6, **characterized in that** it comprises three privileged breaking areas (Z1, Z2, Z3), arranged approximately at a quarter, half and three quarters of the height of the pellet, respectively.

8. Pellet according to one of claims 6 and 7, **characterized in that** the height (h) of the pellet (PA) is greater than, or of the order of, one centimetre.

9. Method for the production, by sintering, of a pellet according to one of the previous claims, from a ceramic comprising a nuclear fuel material, **characterized in that** a mould (MO) is provided comprising at least one rib (NE) forming a projection on an inner wall of the mould.

10. Method for the production, by machining, of a pellet according to one of claims 1 to 8, in which at least one privileged breaking area is engraved in the pellet, **characterized in that** provision is made for recovery (BA) of the machining waste for recycling.

## Patentansprüche

1. Tablette, die ein Kernbrennstoffmaterial enthält, von allgemein länglicher Form entlang einer Achse (z), **dadurch gekennzeichnet, dass** sie auf ihrer äußeren Seitenfläche mindestens eine bevorzugte Bruchzone aufweist, um einen Bruch im Wesentlichen in einer Schnittebene der Achse (z) zu begünstigen.

2. Tablette nach Anspruch 1, von im Wesentlichen zylindrischer Form und mit einer im Wesentlichen kreisförmigen Basis, **dadurch gekennzeichnet, dass** die bevorzugte Bruchzone eine Kerbe (ENC) aufweist, die sich über mindestens einen Kreisbogen erstreckt.

3. Tablette nach Anspruch 2, **dadurch gekennzeichnet, dass** die Kerbe eine Rille (R1, R2) von im Wesentlichen konstanter Tiefe formt.

4. Tablette nach Anspruch 3, **dadurch gekennzeichnet, dass** die Rille (R1, R2) sich über einen vollständigen Kreis erstreckt, der in einer Ebene im Wesentlichen lotrecht zur Achse (z) liegt.

5. Tablette nach einem der vorhergehenden Ansprüche, **dadurch gekennzeichnet, dass** sie eine ausgewählte Anzahl von bevorzugten Bruchzonen aufweist, um einen Bruch in mehrere Fragmente zu begünstigen, wobei jedes Fragment ein Höhe/Breite-Verhältnis geringer als oder in der Größenordnung von 0,5 hat.

6. Tablette nach Anspruch 5, die ein Verhältnis zwischen Höhe (h) und Breite (D) größer als oder in der Größenordnung von 1,5 hat, **dadurch gekennzeichnet, dass** sie mindestens zwei bevorzugte Bruchzonen (Z1, Z2, Z3) aufweist.

7. Tablette nach Anspruch 6, die ein Verhältnis zwischen Höhe (h) und Breite (D) nahe 1,6 hat, **dadurch gekennzeichnet, dass** sie drei bevorzugte Bruchzonen (Z1, Z2, Z3) aufweist, die im Wesentlichen in Viertelhöhe, auf halber Höhe bzw. in Dreiviertelhöhe der Tablette angeordnet sind.

8. Tablette nach einem der Ansprüche 6 und 7, **dadurch gekennzeichnet, dass** die Höhe (h) der Tablette (PA) größer als oder in der Größenordnung von einem Zentimeter ist.

9. Herstellungsverfahren, durch Sintern, einer Tablette nach einem der vorhergehenden Ansprüche, aus einem Keramikmaterial, das ein Kernbrennstoffmaterial enthält, **dadurch gekennzeichnet, dass** ein Formwerkzeug (MO) vorgesehen wird, das mindestens eine Rippe (NE) aufweist, die auf einer Innenwand des Formwerkzeugs einen Vorsprung bildet.

10. Herstellungsverfahren, durch maschinelle Bearbeitung, einer Tablette nach einem der Ansprüche 1 bis 8, bei dem mindestens eine bevorzugte Bruchzone in die Tablette graviert wird, **dadurch gekennzeichnet, dass** eine Wiedergewinnung (BA) der Gravurabfälle zum Recyceln vorgesehen wird.
